Europäisches Patentamt

European Patent Office

Office européen des brevets

(11) Veröffentlichungsnummer : **0 166 103**
**B1**

(12) **EUROPÄISCHE PATENTSCHRIFT**

(45) Veröffentlichungstag der Patentschrift :
02.03.88

(51) Int. Cl.⁴ : **C 08 G 65/46**, C 08 G 65/44

(21) Anmeldenummer : **85104671.4**

(22) Anmeldetag : **17.04.85**

(54) **Verfahren zur Herstellung eines gegen Molekulargewichtsabbau geschützten Polyphenylenethers, bei dem das bei der Kupplungsreaktion eingesetzte Kupfersalz wiederverwendet werden kann.**

(30) Priorität : 25.05.84 DE 3419604
17.11.84 DE 3442141

(43) Veröffentlichungstag der Anmeldung :
02.01.86 Patentblatt 86/01

(45) Bekanntmachung des Hinweises auf die Patenterteilung : 02.03.88 Patentblatt 88/09

(84) Benannte Vertragsstaaten :
AT BE CH DE FR GB IT LI NL SE

(56) Entgegenhaltungen :
EP-A- 0 099 965
EP-A- 0 103 276
DE-A- 2 430 130
DE-A- 2 616 746
DE-A- 2 755 937
DE-A- 3 410 385
US-A- 3 733 301

(73) Patentinhaber : **HÜLS AKTIENGESELLSCHAFT**
**- RSP Patente / PB 15 - Postfach 13 20**
**D-4370 Marl 1 (DE)**

(72) Erfinder : **Bartmann, Martin, Dr.**
**Burgstrasse 35**
**D-4350 Recklinghausen (DE)**
Erfinder : **Burzin, Klaus, Dr.**
**Wellerfeldweg 164**
**D-4370 Marl (DE)**

## Beschreibung

Polyphenylenether und Verfahren zu ihrer Herstellung sind bekannt. Sie werden z. B. in Bühler « Spezialplaste » (akademieverlag, Berlin, 1978) sowie in den US-PSS 3 306 874 und 3 306 875 beschrieben.

Im industriellen Bereich haben sich die Verfahren durchgesetzt, bei denen di-ortho-substituierte Phenole in Gegenwart von Sauerstoff bzw. Sauerstoff enthaltenden Gasmischungen durch Kupferamin-Komplexe oxidativ gekuppelt werden. Zur Herstellung des pulverförmigen Endprodukts sind drei Verfahrensschritte, nämlich das Abstoppen der Polykondensation, die Reinigung des Polymeren und die Isolierung des PPE erforderlich.

Das Abstoppen der Polykondensation kann — abhängig von den jeweiligen Reaktionsbedingungen — zweckmäßigerweise entweder durch Inaktivierung des Katalysators, durch Abtrennen des Katalysators oder durch Abtrennen des Polymeren erfolgen. In einzelnen Fällen bewirken diese Maßnahmen neben der Beendigung der Polykondensation eine wenn auch unvollständige Reinigung des Polymeren.

Die wichtigsten Methoden sind folgende :

1. Zugabe von wäßrigen Säuren,
2. Zugabe von Laugen,
3. Zugabe von Komplexbildnern für Kupferionen und
4. Zugabe von polaren Lösemitteln zur Abtrennung des Polymeren.

Die Zugabe wäßriger Säurelösungen dürfte das am häufigsten angewandte Verfahren zum Abstoppen der Polykondensation sein, obwohl der Verbrauch an Säure erheblich und die Abtrennung des Amins unbefriedigend sind (vgl. DE-OS 22 46 552, Seite 4, Zeilen 1 bis 8). Das Arbeiten in einer Extraktionsapparatur, beispielsweise im Gegenstrom zu einem wäßrigen Säurestrom und gegebenenfalls bei erhöhter Temperatur (DE-OS 21 05 372), stellt zwar verfahrensmäßig eine Verbesserung dar, erfordert aber erhebliche Mengen Alkalimetallhydroxide, um die Amine zurückzugewinnen.

Nach dem Verfahren der zurückgezogenen DE-OS 22 46 552 wird der PPO-Reaktionsansatz, der den Kupferamin-Katalysator und das Polymere in einem aromatischen Lösemittel enthält, durch Behandlung mit $CO_2$/Wasser abgestoppt und aufgearbeitet. Die Abtrennung des Amins vom Polymeren ist indessen unbefriedigend, wie Beispiel A zeigt.

In der DE-OS 15 70 683 wird beschrieben, daß dem PPE-Reaktionsansatz 50 %ige Natriumhydroxidlösung zugesetzt wird. Dieses Verfahren hat sich nicht durchsetzen können, da es nicht zuverlässig die Polymerisation abbricht (vgl. DE-OS 24 30 130).

Mit Hilfe von Chelatisierungsmitteln kann der Katalysator inaktiviert und eine Abtrennung des Kupfers erreicht werden (vgl. DE-PS 15 70 683, Spalte 15, Zeilen 3 bis 5, und DE-OS 26 40 147). Experimentelle Einzelheiten sind ferner der DE-OS 23 64 319 zu entnehmen. Der wesentliche Nachteil aller Verfahren, die mit Chelatisierungsmitteln arbeiten, ist der beobachtete Abbau des Polymeren. Es wurde festgestellt (vgl. DE-OS 27 54 887), daß Polyphenylenether umso schneller abgebaut werden, je höher die Temperatur ist, der sie unterworfen sind, und je mehr Zeit zwischen dem Ende der Reaktion und der Isolierung des Polymeren verstreicht. Beispielsweise nimmt der Viskositätsindex, der ein Maß für das mittlere Molekulargewicht der Polymereinheiten darstellt, bei einer Temperatur von 50 °C üblicherweise um mehr als 0,1, nicht selten sogar um 0,2 dl/g, pro Stunde ab (DE-OS 27 54 887).

Auch durch den Einsatz spezieller Chelatisierungsmittel, wie z. B. der Polyamine in dem Verfahren der DE-OS 24 60 323, läßt sich dieser Abbau nicht vermeiden.

Es wurde vorgeschlagen, den Polymerlösungen neben dem Chelatisierungsmittel weitere Stabilisierungsmittel, wie z. B. zweiwertige Phenole und Reduktionsmittel (vgl. DE-OS 27 54 887 und DE-PS 26 16 746) oder aromatische Amine (vgl. DE-OS 27 55 937), zuzusetzen. Diese Lösungen vermögen indessen nicht zu befriedigen, da man die Zusatzstoffe in teilweise beträchtlichen Konzentrationen benötigt. Außerdem wird die Isolierung der Polyphenylenether dadurch zusätzlich erschwert.

Mit Hilfe von Alkoholen, Ketonen oder deren wäßrigen Lösungen, sogenannten « Antilösemitteln », kann die PPE-Polykondensation gestoppt und das Polymer ausgefällt werden, während Katalysatorreste und Diphenochinon im Lösemittel zurückbleiben. Doch können bereits geringe Mengen Kupfer, die beim Polymeren verbleiben, dessen Farbqualität negativ beeinflussen und einen Abbau katalysieren (vgl. DE-OS 26 16 746).

Allen Fällungsverfahren (siehe z. B. DE-OSS 12 65 410, 25 32 477, 25 32 478, 26 55 161 und 27 52 867) ist gemeinsam, daß erhebliche Mengen an Lösemitteln eingesetzt, aufgearbeitet und redestilliert werden müssen. Man zieht es daher in der Praxis vor, die Polymeren nach einem sogenannten Direktisolationsverfahren zu gewinnen, beispielsweise durch Dampfabscheidung, Sprühtrocknung oder Heißwasserzerkrümelung. Für die Anwendung dieser Verfahren ist aber Voraussetzung, daß die Reste des Kupferkatalysators und andere Verunreinigungen vorher möglichst quantitativ abgetrennt worden sind (vgl. DE-OS 24 60 323).

Schließlich kann man die PPE-Reaktion auch durch gleichzeitige Behandlung mit einem zweiwertigen Phenol oder Benzochinon und einem milden Reduktionsmittel, wie z. B. Hydrazin, abstoppen (vgl.

DE-PS 24 30 130). Der Schrift ist zu entnehmen, daß das erhaltene Polymere innerhalb eines Tages keinem Molekulargewichtsabbau unterliegt. Die Reduktionsmittel allein zeigen keine Wirkung. So sinkt beispielsweise die Viskositätszahl beim Abstoppen mit einem 30 fachen molaren Überschuß Hydrazin innerhalb eines Tages von 0,61 auf 0,44 dl/g (siehe Tabelle I, Versuch 7). Folgt man aber dem beanspruchten Verfahren, so macht sich der Zusatz der zweiwertigen Phenole bzw. Benzochinone störend bemerkbar, die nur schwer mikrobiell abbaubar sind (siehe DE-OS 27 54 887).

Ein grundsätzlicher Nachteil aller bisher bekannten Verfahren zur Herstellung von Polyphenylenethern ist es, daß der Katalysator bei der Aufarbeitung der Reaktion unwiderruflich zerstört wird. Es sind in der Regel umständliche und aufwendige Verfahrensschritte erforderlich, um die anfallenden Kupferreste aufzuarbeiten und in die aktive Katalysatorform zu überführen (z. B. Extraktion mit einem Chelatisierungsmittel, Fällung als Sulfid, Überführen in das Oxid und Auflösen im Bromwasserstoffsäure). Eine weitere, ebenfalls aufwendige Möglichkeit besteht darin, das Kupfersalz aus den anfallenden wäßrigen sauren, alkalischen oder Chelatisierungsmittel enthaltenden Stopplösungen elektrolytisch abzuscheiden und in wiederverwendbare Kupfersalze zu überführen.

Ein Ziel der vorliegenden Erfindung war es, ein Verfahren zur Herstellung von Polyphenylenethern zu finden, bei dem die oxidative Kupplungsreaktion durch Zusatz von nur einem Agens gestoppt und das erhaltene Polymere gleichzeitig gegen Molekulargewichtsabbau geschützt werden kann. Das Polymere sollte weitgehend von Katalysatorrückständen und Nebenprodukten befreit werden. Insbesondere sollten die Anteile von Kupfer und Chinon im Polymeren auf Werte unter 2 ppm bzw. 20 ppm gesenkt werden. Darüber hinaus war ein Polymeres von farblich einwandfreier Qualität erwünscht, das unmittelbar einem Direktisolationsverfahren unterworfen werden kann. .

Schließlich sollte es mit Hilfe dieses Verfahrens möglich sein, den Katalysator unmittelbar zu isolieren. Die bei vielen Verfahren nach dem Stand der Technik erforderliche Abscheidung des Katalysators aus wäßriger Phase, beispielsweise durch Fällung als unlösliches Metallsulfid, sollte entfallen.

Es wurde jetzt gefunden, daß man die PPE-Polykondensation wirksam abstoppen und ein Polymeres der geforderten Qualität erhalten kann, wenn man in einem bestimmten Lösemittelgemisch die Polykondensation durchführt, nach Erreichen des vorgegebenen Polymerisationsgrades den PPE-Ansatz möglichst weitgehend von Sauerstoff befreit, mit Hydrazin versetzt und den erhaltenen Niederschlag abtrennt.

Es is überraschend, daß der erhaltene Niederschlag für eine nachfolgende und weitere Polykondensation ohne erkennbare Wirkungseinbußen wiederverwendet werden kann, da es nach dem Stand der Technik keine Möglichkeiten gab, einmal umgesetzte Kupfersalze noch einmal zu verwenden.

Weitere Gegenstände der Erfindung gehen aus den Ansprüchen 2 bis 11 hervor.

Polymerisationsverfahren zur Herstellung von PPE werden beispielsweise in den deutschen Offenlegungsschriften 32 24 691 und 32 24 692 beschrieben Bezüglich experimenteller Einzelheiten wird auf diese Schriften und die darin zitierte Literatur verwiesen.

Als di-ortho-substituierte Phenole setzt man entweder 2,6-Diphenylphenol oder 2,6-Di-n-alkylphenole ein, deren Alkylreste 1 bis 6 C-Atome aufweisen. Bevorzugt wird 2,6-Dimethylphenol.

Bei dem für die Polykondensation verwendeten Katalysator handelt es sich um einen Komplex aus einem Kupfersalz, z. B. Kupfer-II-bromid, und einem aliphatischen Amin, wie n-Dibutylamin, Diethylamin und Triisopropylamin, oder Morpholin (vgl. US-PS 3 306 874 und US-PS 3 306 875). Der bei der Abstoppung der Polykondensation erhaltene Niederschlag kann mit Vorteil erfindungsgemäß wiederverwendet werden. Wie aus den Beispielen 8 und 9 hervorgeht, weist der unter Verwendung des Niederschlags hergestellte Katalysator im Vergleich zu frisch eingesetztem Katalysator keine Wirkungseinbußen auf. Selbstverständlich kann auch ein Gemisch aus dem erhaltenen Niederschlag und frischen Kupfersalzen zusammen mit dem Amin eingesetzt werden.

Das Reaktionsmedium kann ein chlorierter Kohlenwasserstoff mit 1 bis 4 C-Atomen, wie Methylenchlorid, Chloroform oder Dichlorethan, oder ein aromatisches Lösemittel mit 6 bis 8 C-Atomen, wie Chlorbenzol, Pyridin oder insbesondere Toluol, sein. Vorzugsweise werden Gemische aus diesen chlorierten Kohlenwasserstoffen oder Aromaten mit Alkoholen oder Ketonen mit bis zu jeweils 6 C-Atomen im Volumenverhältnis 92,5 : 7,5 bis 50 : 50 mit der Einschränkung eingesetzt, daß die Polyphenylenether weitgehend gelöst bleiben sollen. Bevorzugt sind Lösemittelgemische aus Methanol und Toluol.

Das Erreichen eines bestimmten Polymerisationsgrades kann auf verschiedene Weisen ermittelt werden. Man kann beispielsweise bekannte physikalisch-chemische Meßmethoden, wie die der Viskositätsbestimmung, zur Kontrolle des Polymerisationsgrades einsetzen oder auch einfach eine bestimmte Reaktionszeit empirisch vorgeben. Bei der Zugabe von Hydrazin soll möglichst wenig Sauerstoff im Gas- und Flüssigkeitsraum zugegen sein. Man erreicht dies zweckmäßigerweise dadurch, daß man den noch vorhandenen Sauerstoff oder das sauerstoffhaltige Reaktionsgas durch ein Inertgas, wie z. B. Stickstoff oder Argon, vertreibt. Man kann aber auch die zur Reaktion benötigte Menge Sauerstoff so einstellen, daß bei Erreichen des gewünschten Polymerisationsgrades praktisch die gesamte Menge verbraucht ist. Das Hydrazin kann entweder als solches oder in Form seiner wäßrigen oder alkoholischen Lösungen eingesetzt werden. Geeignete alkoholische Lösemittel sind insbesondere Methanol und Ethanol. Die Lösungen sollten vorzugsweise wenigstens 10 % Hydrazin enthalten. Verdünnte wäßrige Hydrazinlösungen sind zu vermeiden, da es in diesem Fall bei der Zugabe zur Ausbildung von zwei organischen Phasen kommen kann. Das Hydrazin wird in einer solchen Menge eingesetzt, daß auf 1 Mol Kupferverbindung 1 bis 10 Mole, vorzugsweise 2 bis 5 Mole, Hydrazin kommen.

Die Umsetzung mit dem Hydrazin bzw. dessen Lösung erfolgt im Temperaturbereich zwischen 20 und 100 °C, vorzugsweise zwischen 40 und 70 °C. Beispielsweise setzt man erst dem Reaktionsansatz die gewünschte Menge Hydrazin zu, erwärmt auf eine Temperatur zwischen 40 und 70 °C, hält die Reaktionsmischung 10 bis 20 Minuten bei dieser Temperatur und zentrifugiert sodann den gebildeten kupferhaltigen Niederschlag ab.

Der erhaltene kupferhaltige Niederschlag wird abgetrennt. Es bietet sich an, ihn einfach abzufiltrieren. Die Abtrennung kann aber auch mit Hilfe einer Zentrifuge, eines Separators oder eines Dekanters erfolgen.

Bei einer batch-weisen Herstellung der Polyphenylenether unterbricht man die Polykondensation beim gewünschten Umsatz durch Verdrängen des sauerstoffhaltigen Reaktionsgases, setzt das Hydrazin zu und bringt die Reaktionsmischung auf die gewünschte Temperatur. Nach 1 bis 30 Minuten entfernt man den gebildeten kupferhaltigen Niederschlag z. B. durch Zentrifugieren.

Bei der kontinuierlich durchgeführten oxidativen Kupplungsreaktion, beispielsweise nach dem Verfahren der deutschen Patentanmeldung P 34 05 629.7, kann der Austrag der letzten Reaktionsstufe vorzugsweise direkt in einem geeigneten Mischelement mit Hydrazin beaufschlagt und auf die gewünschte Temperatur gebracht werden, wenn der Sauerstoffgehalt der flüssigen Phase durch geeignete Dosierung der Sauerstoffzufuhr unter $6 \cdot 10^{-3}$ Mol/l gesenkt werden kann. In einem kontinuierlich arbeitenden Apparat, wie z. B. einem Separator oder einem Vollmanteldekanter, kann dann der kupferhaltige Niederschlag abgetrennt werden.

Es empfiehlt sich, im Falle einer kontinuierlichen Fahrweise pro Mol einzusetzendem di-ortho-substituierten Phenol 0,05 bis 1 Molprozent eines Reglers zuzusetzen. Geeignete Regler sind z. B. Derivate dieser di-ortho-substituierten Phenole, die in 4-Stellung durch Alkylgruppen mit 1 bis 4 C-Atomen substituiert sind, beispielsweise 2,6-Dimethyl-4-tert.-butylphenol.

Die Aufarbeitung der erhaltenen Lösungen ist nicht kritisch. Es können die aus dem Stand der Technik bekannten Methoden angewandt werden. Bei Fällung mittels Zugabe sogenannter Antilösemittel oder bei Anwendung von Direktisolationsmethoden, wie z. B. der Heißwasserzerkrümelung, kann die erhaltene Lösung direkt eingesetzt werden. Sollen allerdings direkt aufkonzentrierte Lösung bzw. Schmelzen hergestellt werden, empfiehlt es sich, die Polyphenylenetherlösung vor der eigentlichen Aufkonzentrierung mit Wasser zu waschen. Vor oder nach dieser Wasserwäsche können den Lösungen übliche Stabilisatoren, wie sie beispielsweise bei der Herstellung von Polyphenylenether-Polystyrol-Mischungen (vgl DE-PS 16 94 257 und DE-OS 21 19 301) verwendet werden, (z. B. organische Phosphite und/oder andere Antioxidantien, UV-Stabilisatoren, Weichmacher und Flammschutzmittel), zugesetzt werden.

Der in den Beispielen angegebene J-Wert gibt die relative Viskositätsänderung einer 0,5 %igen Lösung des Polymeren in Chloroform bei 25 °C im Vergleich zum reinen Lösemittel entsprechend DIN 53 728 an.

## Beispiel 1

Katalysatorherstellung

Man löst 1,95 g $CuCO_3 \cdot Cu(OH)_2$ in 5,7 g Bromwasserstoffsäure (48 %ig) auf und gibt die erhaltene homogene Lösung unter Rühren zu 30 g Morpholin.

Herstellung von Poly-(2,6-Dimethyl-1,4-phenylenether) : In einem 3-l-Rührreaktor vereinigt man die oben hergestellte Katalysatorlösung mit einer Mischung aus 1 300 g Toluol und 207 g Methanol, gibt 30 g einer 50 %igen Lösung von 2,6-Dimethylphenol in Toluol hinzu und startet die Polykondensation unter Rühren (750 U/min) durch Einleiten eines Luftstromes von 200 l/h. Die Reaktionstemperatur wird bei 30 °C gehalten. Nach 10 min tropft man weitere 270 g der 50 %igen toluolischen Dimethylphenol-Lösung über einen Zeitraum von 30 min zu. 30 min nach der letzten Phenolzugabe ersetzt man den Luftstrom durch einen Stickstoffstrom von 100 l/h. Nach fünfminütiger Stickstoffspülung rührt man 4,7 g Hydrazinhydrat ($N_2H_4 \cdot H_2O$) ein und erwärmt die Reaktionsmischung auf 45 °C. 10 min nach der Hydrazinhydratzugabe zentrifugiert man den kupferhaltigen Niederschlag ab. Das Polymere gewinnt man durch Zugabe von 1 500 g Methanol zur zentrifugierten Lösung.

| | |
|---|---|
| J = | 55 ml/g |
| Chinongehalt = | < 20 ppm |
| Kupfergehalt = | < 2 ppm |

Wäscht man die Polymerlösung nach Abtrennen des kupferhaltigen Niederschlags mit $H_2O$ bei 60 °C nach, so bleibt der J-Wert des Polyphenylenethers konstant.

## Beispiel 2

In der in Beispiel 1 beschriebenen Apparatur vereinigt man die in Beispiel 1 beschriebene Katalysatorlösung mit einer Mischung aus 1 490 g Toluol und 166 g Methanol, gibt 30 g einer 50 %igen Lösung von 2,6-Dimethylphenol (DMP) in Toluol zu und startet die Polykondensation unter Rühren (750 U/min) durch Einleiten eines Luftstroms von 200 l/h. Die Reaktionstemperatur wird wie in Beispiel 1 konstant (± 1 °C) bei 30 °C gehalten. Nach 10 Minuten tropft man weitere 270 g der toluolischen DMP-Lösung über einen Zeitraum von 30 Minuten zu. 35 Minuten nach der letzten Phenolzugabe ersetzt man den Luftstrom durch einen Stickstoffstrom von 100 l/h. Nach fünfminütiger Stickstoffspülung rührt man eine Lösung von 1,87 g Hydrazin in 10 g Methanol ein, erwärmt die Reaktionsmischung auf 55 °C und rührt bei dieser Temperatur 10 Minuten nach. Anschließend zentrifugiert man den kupferhaltigen Niederschlag ab und gewinnt das Polymere aus der organischen Phase durch Zugabe von 1 500 g Methanol.

J =     55 ml/g

Chinongehalt (UV-Absorption bei 420 nm in einer 1 %igen Lösung
nach Abtrennen des kupferhaltigen Niederschlags) =     < 0,2 mg/l

Chinongehalt (im gefällten Produkt) =     < 20 ppm

Kupfergehalt =     < 2 ppm

## Beispiel 3

Wie Beispiel 1, jedoch mit 170 g 2,6-Diethylphenol anstelle von 150 g Dimethylphenol.

J =     52 ml/g

Chinongehalt =     < 20 ppm

Kupfergehalt =     < 2 ppm

## Beispiel 4

Wie Beispiel 1, jedoch unterbricht man 15 Minuten nach der letzten Phenolzugabe die Polykondensation durch fünfminütiges Spülen mit Stickstoff. Daraufhin wird der Ansatz geteilt:

Der erste Teil wird mit 2,9 g $N_2H_4 \cdot H_2O$ verrührt und unter Stickstoffabdeckung stehengelassen. Ein kupferhaltigen Niederschlag fällt aus. Im Abstand von 8 Stunden wird der J-Wert des Polymeren bestimmt (Tabelle 1). Nach 24 Stunden leitet man Luft ein und beobachtet eine deutliche Verfärbung der nach der Hydrazinbehandlung fast farblosen Polymerlösung. Im zeitlichen Abstand werden Proben zur J-Wert-Bestimmung gezogen. Nach 60 Minuten hat sich der kupferhaltige Niederschlag aufgelöst (Tabelle 2).

### Tabelle 1

J-Wert-Konstanz bei Hydrazinbehandlung unter Stickstoff

|  | t = 0 | t = 8 h | t = 16 h | t = 24 h |
|---|---|---|---|---|
| J-Wert (ml/g) | 19 | 19 | 19 | 19 |

### Tabelle 2

J-Wert-Anstieg und Auflösung des Niederschlags in Gegenwart von Sauerstoff bei gleichzeitiger Chinonbildung

|  | t = 0 | t = 15 min | t = 30 min | t = 60 min |
|---|---|---|---|---|
| J-Wert (ml/g) | 19 | 40 | 65 | > 100 |
| Chinongehalt (mg/l) | 1 | ca. 20 | 40 | 40 |

Der zweite Teil wird noch 15 Minuten weiter kondensiert und anschließend wie der erste Teil

5

behandelt und untersucht (vgl. Tabellen 3 und 4).

Tabelle 3

|  | t = 0 | t = 8 h | t = 16 h | t = 24 h |
|---|---|---|---|---|
| J-Wert (ml/g) | 54 | 53 | 54 | 54 |

Tabelle 4

|  | t = 0 | t = 15 min | t = 30 min | t = 60 min |
|---|---|---|---|---|
| J-Wert (ml/g) | 54 | 57 | 63 | 70 |
| Chinongehalt (mg/ml) | 1 | 20 | 32 | 40 |

## Beispiel 5

Wie Beispiel 1, jedoch unter Verwendung einer Mischung aus 1 300 g Chloroform und 207 g Methanol als Lösemittel und einer 50 %igen Lösung von 2,6-Dimethylphenol in Chloroform.

| | |
|---|---|
| J = | 35 ml/g |
| Chinongehalt = | < 20 ppm |
| Kupfergehalt = | < 2 ppm |

## Beispiel 6

Wie Beispiel 1, jedoch unter Verwendung von 1 500 g Methylenchlorid als Lösemittel, einer 50 %igen Lösung von 2,6-Dimethylphenol in Methylenchlorid und einer auf 20 Minuten verkürzten Nachreaktionszeit.

| | |
|---|---|
| J = | 35 ml/g |
| Chinongehalt = | < 20 ppm |
| Kupfergehalt = | < 2 ppm |

## Beispiel 7

In einem 2-l-Rührreaktor werden 800 ml Toluol, 2,0 g Kupfer-(II)-chlorid, 200 g Morpholin und 5 g Morpholiniumbromid vermischt. Nach Zugabe von 100 g 2,6-Dimethylphenol, gelöst in 100 g Toluol, und 4 g 50 %iger NaOH-Lösung, wird durch ein Tauchrohr ein Luftstrom von 200 l/h eingestellt und die Polymerisation in Gang gesetzt. Die Temperatur der Reaktionsmischung wird zwischen 30 und 35 °C gehalten. Nach 90 Minuten wird der Luftstrom durch einen Stickstoffstrom von 100 l/h ersetzt. Nach fünfminütigem Spülen mit dem Inertgas rührt man 3,2 g Hydrazinhydrat ($N_2H_4 \cdot H_2O$) ein und erwärmt die Reaktionsmischung auf 45 °C. Das weitere Vorgehen entspricht Beispiel 1.

| | |
|---|---|
| J = | 58 ml/g |
| Chinongehalt = | < 20 ppm |
| Kupfergehalt = | < 2 ppm |

## Beispiel 8

In der in Beispiel 1 beschriebenen Apparatur legt man eine Mischung aus 1 300 g Toluol, 207 g Methanol und 30 g Morpholin vor, fügt den in Beispiel 1 isolierten Niederschlag (3,8 g nach Trocknung) und 30 g einer 50 %igen Lösung von 2,6-Dimethylphenol in Toluol zu und startet die Polykondensation unter Rühren (750 U/min) durch Einleiten eines Luftstroms von 200 l/h. Fünf Minuten nach Beginn der Luftzufuhr hatte sich der ursprünglich unlösliche Kupferkomplex aufgelöst. Nach weiteren fünf Minuten tropft man wie in Beispiel 1 weitere 270 g der 50 %igen toluolischen Dimethylphenol-Lösung über einen Zeitraum von 30 Minuten zu. Die weitere Durchführung entspricht Beispiel 1.

| J = | 54 ml/g |
|---|---|
| Chinongehalt = | < 20 ppm |
| Kupfergehalt = | < 2 ppm |

## Beispiel 9

Mit dem isolierten kupferhaltigen Niederschlag aus Beispiel 8 (3,6 g nach Trocknung) wird erneut entsprechend Beispiel 8 2,6-Dimethylphenol polykondensiert.

## Beispiel A

Wie Beispiel 1, jedoch wird das Hydrazinhydrat gemeinsam mit dem 2,6-Dimethylphenol zudosiert. Die Polykondensation wird nicht verhindert. Die Bildung eines kupferhaltigen Niederschlags wird nicht beobachtet.

## Beispiel B (entsprechend DE-OS 2 616 746)

Wie Beispiel 1, jedoch rührt man nach der Stickstoffspülung eine Lösung von 10 g Ethylendiamintetraessigsäure-dinatriumsalz (EDTA) und 4,7 g Hydrazinhydrat in 150 ml $H_2O$ ein. Nach Phasentrennung isoliert man das Polymere durch Fällung mit Methanol. Das gesamte Kupfer befindet sich in gelöster Form in der wäßrigen Phase.

| J = | 55 ml/g |
|---|---|
| Chinongehalt (UV-Absorption bei 420 nm nach Phasentrennung) = | < 0,2 mg/l |
| Chinongehalt (im gefällten Produkt) = | < 20 ppm |
| Kupfergehalt = | 2 ppm |

Ein Ziel der vorliegenden Erfindung, das darin besteht, keine Abtrennung des in wäßriger Phase gelösten Kupfers vornehmen zu müssen, wird nicht erreicht.

## Beispiel C (entsprechend DE-PS 2 430 130)

Wie Beispiel 1, jedoch rührt man eine Lösung von 5,8 g Hydrochinon und 8,82 g $N_2H_4 \cdot H_2O$ in 200 ml Wasser ein. Nach Abtrennung des Niederschlags und Phasentrennung wäscht man die Polymerlösung nochmals mit 200 ml Wasser nach.

| J = | 55 ml/g |
|---|---|
| Chinongehalt der gewaschenen Lösung = | 48 mg/l |

Beim Aufkonzentrieren auf einen Feststoffgehalt von 50 % erhält man eine dunkelbraune Schmelze, die zur Herstellung qualitativ hochwertiger Polymermischungen auf Basis von Polyphenylenethern und schlagzähem Polystyrol ungeeignet ist. Die nach Beispiel 1 erhaltenen 50 %igen Schmelzen sind dagegen lediglich leicht gelb gefärbt.

## Patentansprüche

1. Verfahren zur Herstellung eines gegen Molekulargewichtsabbau geschützten Polyphenylenethers durch oxidative Kupplungsreaktion von di-ortho-substituierten Phenolen in Gegenwart eines katalytisch wirksamen Kupfersalz-Aminkomplexes, Abstoppung der Reaktion und Abtrennung der Kupferkomponente, dadurch gekennzeichnet, daß man
   1. für die oxidative Kupplungsreaktion als Reaktionsmedium wählt :
      a) einen chlorierten Kohlenwasserstoff mit 1 bis 4 C-Atomen,
      b) ein aromatisches Lösemittel mit 6 bis 8 C-Atomen oder
      c) ein Gemisch aus einem Lösemittel nach a) oder b) und einem Alkohol oder Keton mit bis zu jeweils 6 C-Atomen im Volumenverhältnis 92,5 : 7,5 bis 50 : 50 mit der Einschränkung, daß während der oxidativen Kupplungsreaktion die Polyphenylenether weitgehend in Lösung bleiben sollen,
   2. den für die Kupplungsreaktion erforderlichen Sauerstoff entfernt,
   3. die Reaktionslösung nur mit Hydrazin oder einer hydrazinischen Lösung versetzt und
   4. den erhaltenen Niederschlag abtrennt.
2. Verfahren nach Anspruch 1, dadurch gekennzeichnet, daß man den vorhandenen Sauerstoff oder das sauerstoffhaltige Reaktionsgas mit Hilfe eines Inertgases, wie z. B. Stickstoff oder Argon, vertreibt.
3. Verfahren nach den Ansprüchen 1 und 2, dadurch gekennzeichnet, daß man die für die oxidative Kupplungsreaktion benötigte Menge. Sauerstoff so einstellt, daß bei Erreichen des gewünschten Polymerisationsgrades praktisch die gesamte Menge verbraucht ist.

4. Verfahren nach den Ansprüchen 1 bis 3, dadurch gekennzeichnet, daß man die Reaktionslösung bei einer Temperatur von 20 bis 100 °C, vorzugsweise 40 bis 70 °C, mit Hydrazin oder einer hydrazinischen Lösung versetzt.

5. Verfahren nach den Ansprüchen 1 bis 4, dadurch gekennzeichnet, daß das Molverhältnis zwischen eingesetztem Hydrazin und Kupfer zwischen 1 : 1 und 10 : 1, vorzugsweise zwischen 2 : 1 und 5 : 1, liegt.

6. Verfahren nach den Ansprüchen 1 bis 5, dadurch gekennzeichnet, daß man als di-ortho-substituiertes Phenol 2,6-Dimethylphenol einsetzt.

7. Verfahren nach den Ansprüchen 1 bis 6, dadurch gekennzeichnet, daß man als Reaktionsmedium ein Gemisch aus einem aromatischen Kohlenwasserstoff und Methanol oder Ethanol im Volumenverhältnis 92,5 : 7,5 bis 50 : 50 mit der Einschränkung einsetzt, daß die Polyphenylenether weitgehend gelöst bleiben sollen.

8. Verfahren nach Anspruch 7, dadurch gekennzeichnet, daß man ein Lösemittelgemisch aus Methanol und Toluol verwendet.

9. Verfahren nach den Ansprüchen 1 bis 8, dadurch gekennzeichnet, daß man die oxidative Kupplung kontinuierlich durchführt.

10. Verfahren nach Anspruch 9, dadurch gekennzeichnet, daß man dem di-ortho-substituierten Phenol einen Regler, z. B. ein di-ortho-substituiertes Phenol, das in 4-Stellung einen Alkylrest mit 1 bis 4 C-Atomen trägt, in einer Menge von 0,05 bis 1 Molprozent, bezogen auf 1 Mol zu polymerisierendem Phenol, zusetzt.

11. Verfahren nach den Ansprüchen 1 bis 10, dadurch gekennzeichnet, daß man den erhaltenen Niederschlag, gegebenenfalls unter Ergänzung von frischem Kupfersalz, zusammen mit einem geeigneten Amin als Katalysator für eine nachfolgende oxidative Kupplungsreaktion wiederverwendet.

## Claims

1. A process for the production of a polyphenylene ether protected against molecular weight degradation comprising oxidatively coupling a di-ortho-substituted phenol in the presence of a catalytically active copper salt/amine complex, terminating the reaction and separating the copper component, characterised in that

1. there is chosen as reaction medium for the oxidative coupling reaction :
   a) a chlorinated hydrocarbon of 1 to 4 carbon atoms,
   b) an aromatic solvent of 6 to 8 carbon atoms, or
   c) a mixture of a solvent of type a) or b) and an alcohol or ketone of up to 6 carbon atoms in a ratio from 92.5 : 7.5 to 50 : 50 by volume, with the proviso that during the oxidative coupling reaction the polyphenylene ether remains predominantly in solution,
2. the oxygen required for the coupling reaction is removed,
3. the reaction solution is treated only with hydrazine or a hydrazine solution, and
4. the resulting precipitate is separated.

2. A process according to claim 1, characterised in that the oxygen or oxygen-containing reaction gas present is driven off with the aid of an inert gas, for example nitrogen or argon.

3. A process according to claim 1 or 2, characterised in that the quantity of oxygen required for the oxidative coupling reaction is introduced in such a way that practically the total quantity has been consumed by the time the desired degree of polymerisation has been reached.

4. A process according to any of claims 1 to 3, characterised in that the reaction solution is treated at a temperature of 20 to 100 °C, preferably 40 to 70 °C, with hydrazine or a hydrazine solution.

5. A process according to any of claims 1 to 4, characterised in that the mole ratio of introduced hydrazine to copper is from 1 : 1 to 10 : 1, preferably from 2 : 1 to 5 : 1.

6. A process according to any of claims 1 to 5, characterised in that 2,6-dimethylphenol is introduced as di-ortho-substituted phenol.

7. A process according to any of claims 1 to 6, characterised in that there is used as reaction medium a mixture of an aromatic hydrocarbon and methanol or ethanol in a ratio from 92.5 : 7.5 to 50 : 50 by volume with the proviso that the polyphenylene ether remains predominantly dissolved.

8. A process according to claim 7, characterised in that a solvent mixture of methanol and toluene is used.

9. A process according to any of claims 1 to 8, characterised in that the oxidative coupling is carried out continuously.

10. A process according to claim 9, characterised in that a regulator, for example a di-ortho-substituted phenol which bears an alkyl group of 1 to 4 carbon atoms in the 4-position, is added to the di-ortho-substituted phenol in an amount of 0.05 to 1 mol per cent, based on 1 mole of the phenol to be polymerised.

11. A process according to any of claims 1 to 10, characterised in that the resulting precipitate is reused, optionally with the addition of fresh copper salt, as catalyst for a subsequent oxidative coupling reaction together with a suitable amine.

**Revendications**

1. Procédé de préparation d'un éther polyphénylénique protégé contre une dégradation du poids moléculaire, par réaction oxydante de copulation de phénols di-ortho-substitués, en présence d'un complexe sel de cuivre amine exerçant un effet catalytique, par arrêt de la réaction et par séparation du composant de cuivre, caractérisé par le fait que :

1. pour la réaction oxydante de copulation, on choisit comme milieu réactionnel :
   a) un hydrocarbure chloré comportant de un à 4 atomes de carbone,
   b) un solvant aromatique comportant de 6 à 8 atomes de carbone, ou
   c) un mélange d'un solvant selon a) ou b) et d'un alcool ou d'une cétone comportant chaque fois jusqu'à 6 atomes de carbone, dans une proportion volumétrique de 92,5 : 7,5 à 50 : 50, avec cette restriction que, pendant la réaction oxydante de copulation, les éthers polyphényléniques doivent largement rester en solution,

2. on élimine l'oxygène nécessaire pour la réaction de copulation,

3. on n'ajoute à la solution réactionnelle que de l'hydrazine ou une solution d'hydrazine, et que

4. on sépare le précipité

2. Procédé selon la revendication 1, caractérisé par le fait que l'on chasse l'oxygène présent ou le gaz de réaction renfermant de l'oxygène, à l'aide d'un gaz inerte, par exemple l'azote ou l'argon.

3. Procédé selon les revendications 1 et 2, caractérisé par le fait que l'on ajuste la quantité d'oxygène nécessaire pour la réaction oxydante de copulation de manière que, lorsque le degré désiré de polymérisation est atteint, la quantité totale ait pratiquement été consommée.

4. Procédé selon les revendications 1 à 3, caractérisé par le fait que l'on ajoute à la solution réactionnelle de l'hydrazine ou une solution d'hydrazine, à une température de 20 à 100 °C, de préférence de 40 à 70 °C.

5. Procédé selon les revendications 1 à 4, caractérisé par le fait que le rapport molaire entre l'hydrazine utilisée et le cuivre est compris entre 1 : 1 et 10 : 1, de préférence entre 2 : 1 et 5 : 1.

6. Procédé selon les revendications 1 à 5, caractérisé par le fait que l'on utilise le 2,6-diméthylphénol en tant que phénol di-ortho-disubstitué.

7. Procédé selon les revendications 1 à 6, caractérisé par le fait que l'on utilise, comme milieu réactionnel, un mélange constitué par un hydrocarbure aromatique et par du méthanol ou de l'éthanol dans un rapport volumétrique de 92 : 7,5 à 50 : 50, avec cette restriction que les éthers polyphényléniques doivent rester largement en solution.

8. Procédé selon la revendication 7, caractérisé par le fait que l'on utilise un mélange solvant formé de méthanol et de toluène.

9. Procédé selon les revendications 1 à 8, caractérisé par le fait que l'on effectue en continu la copulation oxydante.

10. Procédé selon la revendication 9, caractérisé par le fait que l'on ajoute au phénol di-orthosubstitué un régulateur, par exemple un phénol di-orthosubstitué portant en position 4 un radical alkyle comportant de 1 à 4 atomes de carbone, dans une quantité de 0,05 à 1 mol%, relativement à 1 mole de phénol à polymériser.

11. Procédé selon les revendications 1 à 10, caractérisé par le fait que l'on utilise à nouveau le précipité obtenu, le cas échéant en complétant avec du sel de cuivre frais, conjointement avec une amine appropriée en tant que catalyseur, pour une réaction ultérieure de copulation oxydante.